# EUROPEAN PATENT SPECIFICATION

(11) **EP 2 344 748 B1**
(45) Date of publication and mention of the grant of the patent: **09.01.2013**
(21) Application number: 08875941.0
(22) Date of filing: 06.11.2008
(51) Int. Cl.: F02M 25/07, F01N 3/021

(54) **INTERNAL COMBUSTION ENGINE SYSTEM AND PARTICULATE FILTER UNIT FOR SUCH AN INTERNAL COMBUSTION ENGINE SYSTEM**
VERBRENNUNGSMOTORSYSTEM UND PARTIKELFILTEREINHEIT FÜR SOLCH EIN VERBRENNUNGSMOTORSYSTEM
SYSTÈME DE MOTEUR À COMBUSTION INTERNE ET ENSEMBLE FILTRE À PARTICULES POUR UN TEL SYSTÈME DE MOTEUR À COMBUSTION INTERNE

(43) Date of publication of application: 20.07.2011
(73) Proprietor: Renault Trucks, 69800 Saint Priest (FR)
(72) Inventor: DRONNIOU, Nicolas, F-78000 Versailles (FR)
(74) Representative: Putet, Gilles
(86) International application number: PCT/IB2008/055637
(87) International publication number: WO 2010/052527

(56) References cited:
- EP-A- 1 486 242
- EP-A- 1 865 161
- WO-A-03/102389
- WO-A-2007/140148
- DE-A1- 3 919 533
- DE-A1-102005 008 638
- JP-A- 59 101 521
- US-A1- 2006 266 019
- HADLER J ET AL: "Der neue 2,0-l-TDI-Motor von Volkswagen fuer niedrigste Abgasgrenzwerte - Teil 1" MTZ MOTORTECHNISCHE ZEITSCHRIFT, VIEWEG VERLAG, WIESBADEN, DE, vol. 69, no. 5, 1 May 2008 (2008-05-01), pages 386-395, XP001518704 ISSN: 0024-8525

## Description

### TECHNICAL FIELD OF THE INVENTION

The present invention relates to an internal combustion engine system comprising an exhaust gas recirculation assembly and to a particulate filter unit for such an internal combustion engine system.

### BACKGROUND OF THE INVENTION

Internal combustion engines produce hazardous products which are carried by the exhaust gases released into the atmosphere. Such hazardous products usually comprise some nitrogen oxides known as NOₓ, e.g. nitrogen monoxide, carbon monoxide (CO), hydrocarbons (HC) and, especially within a Diesel engine, various particulate products. It is known to use an exhaust gas recirculation (EGR) assembly in order to reduce the amount of nitrogen oxides produced by internal combustion engine.

In the case of turbocharged internal combustion engines, the EGR assembly may be arranged in various manners with respect to a turbocharger of the internal combustion engine system. In a so-called long-route EGR assembly, also called low-pressure loop EGR assembly, e.g. the one described in WO-A-2007/140148, the EGR assembly inlet is connected downstream of a turbine outlet of the turbocharger and a recirculation outlet of the assembly is connected upstream of a compressor inlet of the turbocharger to allow recirculation of a portion of the turbine exhaust gases towards the compressor. A flow divider is normally arranged at the EGR assembly inlet, in order to divert a portion of the exhaust gases away from the exhaust outlet and guide it towards the recirculation outlet, while another portion goes straight to the exhaust outlet to be released into the atmosphere.

As in many Diesel engine systems, the system of WO-A-2007/140148 also comprises a particulate filter unit, like a Diesel particulate filter (DPF), intended to decrease the amount of particulate products, for instance soot and other organic residues. The DPF is here installed so as to remove the particles both for the exhaust gases which are recirculated and for the exhaust gases which flow to the atmosphere.

Besides, Diesel engine systems now usually comprise a converter unit intended to decrease the amount of some environmentally hazardous gases, like nitrogen monoxide (NO) in the exhaust gases. Such a converter unit may comprise a nitrogen oxides (NOₓ) trap and/or a catalyst, like a selective catalyst reduction (SCR) system. It is known that a converter unit is more efficient when operating at a specified range of temperatures. Therefore, in a long-route EGR assembly, it may be preferable to place the converter unit upstream of the particulate filter unit. Moreover, where the converter unit consists of an SCR system, liquid urea is injected upstream of the SCR system, in particular for reduction of nitrogen monoxide (NO) into neutral nitrogen (N₂). In WO-A-2007/140148, a mobile flap is provided downstream of the EGR assembly inlet to increase the pressure at said inlet, in order to increase the part or portion of the exhaust gases flowing into the recirculation outlet.

DE 10 2005 008 638 A1 describes a Diesel engine with two particulate filters. WO 03/102389 A1 shows two particulate filters in a common casing and separated by an insulation material.

### SUMMARY OF THE INVENTION

One object of the present invention is to provide an internal combustion engine system, comprising a turbocharged internal combustion engine, an intake line, an exhaust line, a turbocharger having a turbine located in said exhaust line and a compressor located in said intake line, and an exhaust gas recirculation assembly, for recirculating towards said intake line a part of the exhaust gases which flow out of said turbine, said exhaust gas recirculation assembly comprising:
- an exhaust gas recirculation assembly inlet connected to said exhaust line downstream of said turbine , so as to collect said part of the exhaust gases,
- an exhaust gas recirculation assembly outlet connected to said intake line upstream of said compressor so as to allow said part of the exhaust gases towards said intake line and said compressor,
- a particulate filter unit, for decreasing the amount of particulate products within said exhaust gases.

Said internal combustion engine system further comprises a converter unit, for decreasing at least the amount of nitrogen oxides within said exhaust gases, said converter unit being fluidically arranged in said exhaust line downstream of said turbine.

Said particulate filter unit comprises a first particulate filter component fluidically arranged in said exhaust line downstream of said converter unit, said first particulate filter component defining a first flow path.

Said particulate filter unit comprises a second particulate filter component fluidically arranged in said exhaust gas recirculation assembly, downstream of said exhaust gas recirculation assembly inlet and upstream of said exhaust gas recirculation assembly outlet, said second particulate filter component defining a second flow path.

Said first particulate filter component and said second particulate filter component are thermally connected, and said first flow path and said second flow path are separate.

According to other advantageous but optional features of the present invention, considered on their own or in any technically possible combinations:
- said internal combustion engine system further comprises a recirculation valve, for controlling the recirculation flow flowing into said exhaust gas recirculation assembly;
- said first particulate filter component and said second particulate filter component are adjacent;
- a gas-tight partition is arranged between said first particulate filter component and said second particulate filter component, so as to allow heat transfer between said first particulate filter component and said second particulate filter component;
- one of said first and second particulate filter components encases the other one of said first and second particulate filter components;
- said first particulate filter component laterally encases at least part of said second particulate filter component;
- said first and second particulate filter components are arranged in a coaxial manner;
- said gas-tight partition is of a general cylindrical form and wherein said particulate filter unit comprises an outer cylindrical wall, said first particulate filter component extending between said gas-tight partition and said outer cylindrical wall, and said second particulate filter component extending within said gas-tight partition;
- said first particulate filter component fully laterally encases said second particulate filter component;
- said gas-tight partition is made of a material having a thermal conductivity higher than 25 W.m⁻¹.K⁻¹;
- at least one heating device is arranged either near or within said first particulate filter component, for promoting the regeneration of said first particulate filter component;
- said heating device comprises a fuel injector for injecting fuel in said exhaust line downstream of said converter unit;
- a supply duct is arranged to supply a deoxidizing agent to said converter unit, said supply duct being connected to said exhaust line upstream of said converter unit; and
- said internal combustion engine system further comprises an oxidation catalyst located in said exhaust line upstream of said first particulate filter component.

A further object of the present invention is to provide a particulate filter unit adapted to be mountable on such an internal combustion engine system. This object is achieved by a particulate filter unit for an internal combustion engine system, characterized in that it comprises at least a first particulate filter component defining a first flow path, a second particulate filter component defining a second flow path, said first particulate filter component and said second particulate filter component being thermally connected, and said first flow path and said second flow path being separate.

### BRIEF DESCRIPTION OF THE DRAWINGS

The present invention and its advantages will be well understood on the basis of the following description, which is given as an illustrated example, without restricting the scope of the invention, in relation with the annexed drawings, among which:
- figure 1 is a general schematic view of an internal combustion engine system according to the invention, equipped with an EGR assembly according to the invention and comprising a particulate filter unit according to the invention; and
- figure 2 is a cross-section along, line II-II on figure 1, of the particulate filter unit.

### DETAILED DESCRIPTION OF SOME EMBODIMENTS

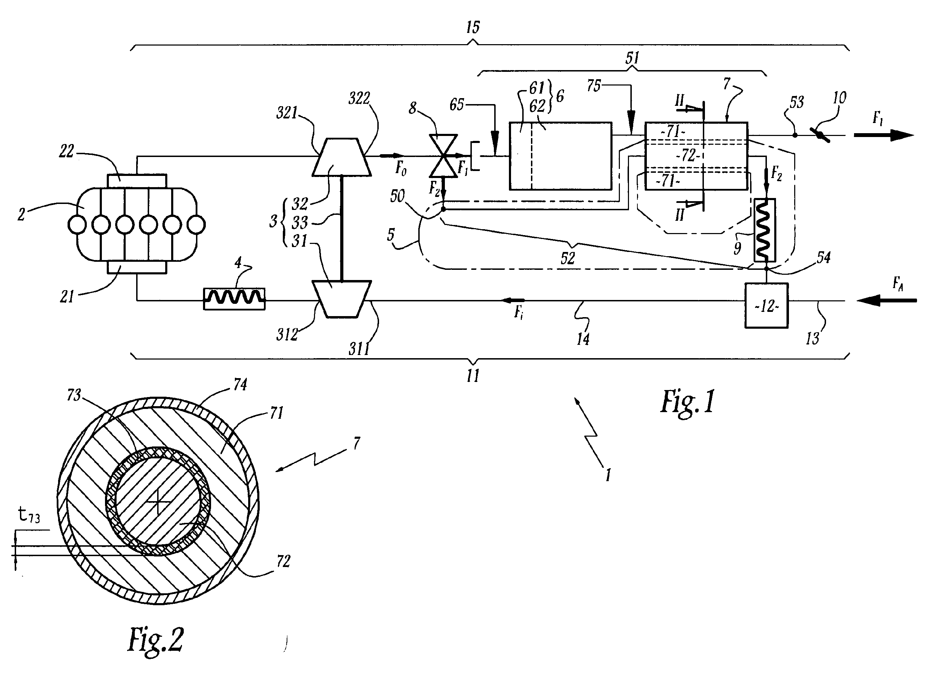

Figure 1 illustrates an internal combustion engine system 1, which comprises an internal combustion engine 2 of the Diesel type. The internal combustion engine 2 is connected to an intake line 11 comprising an intake manifold 21, which is intended to supply intake gases to the internal combustion engine 2. Besides, internal combustion engine 2 is in connection with an exhaust line 15 comprising an exhaust manifold 22, which is intended to collect the exhaust gases from the internal combustion engine 2. The terms "connect" and "connection" are to be construed herein as a link that enables a fluid, whether gas or liquid, to flow or circulate between two or more points or parts; such a link can be direct or made of a duct, of a pipe, etc.

Internal combustion engine system 1 is equipped with a turbocharger 3, which comprises a compressor 31 and a turbine 32 joined together by a driving shaft 33. An inlet 321 of turbine 32 is connected to exhaust manifold 22. The turbine 32 is located in the exhaust line 15, whereas the compressor 31 is located in the intake line 11. Internal combustion engine system 1 may further comprise a charge air cooler 4, located in the intake line 11 downstream of an outlet 312 of compressor 32 and upstream of intake manifold 21. Charge air cooler 4 is adapted to cool intake gases before they enter internal combustion engine 2. Thus, intake gases flow out of compressor 31 from compressor outlet 312, through charge air cooler 4 and into intake manifold 21.

Internal combustion engine system 1 also comprises an exhaust gas recirculation assembly 5. EGR assembly 5 comprises an assembly inlet 50 which is connected downstream of an outlet 322 of turbine 32. On figure 1, EGR assembly inlet 50 is connected to turbine outlet 322. The terms "downstream" and "upstream" herein refer to the main direction of flow of exhaust gases or of intake gases.

EGR assembly 5 comprises a recirculation flow path 52 which is separated from a release exhaust flow path 51 by a flow divider, that can be made of a recirculation valve 8, which is arranged at the EGR assembly inlet 50 in order to divide the turbine exhaust flow F₀ of exhaust gases in two distinct parts of exhaust gases, i.e. a release exhaust flow F₁ of exhaust gases and a recirculation flow F₂ of exhaust gases. The recirculation flow F₂ is a part of the turbine exhaust gases F₀ which flow into said exhaust line 15. The recirculation flow F₂ is collected by the EGR assembly inlet 50 located downstream of the turbine 32. The portion of the turbine exhaust flow F₀ of exhaust gases that flows into release exhaust flow path 51 forms the release exhaust flow F₁, whereas the portion of the turbine exhaust flow F₀ that flows into recirculation flow path 52 forms the recirculation flow F₂.

The release exhaust flow path 51 ends up to the atmosphere through a release outlet 53, whereas recirculation flow path 52 ends up to the intake line 11 with a recirculation outlet 54. Thus, release exhaust flow path 51 extends downstream of recirculation valve 8 and upstream of release outlet 53, whereas recirculation flow path 52 extends downstream of recirculation valve 8 and upstream of recirculation outlet 54. The recirculation outlet 54 is connected, upstream of the compressor 31, to intake line 11 so as to allow the recirculation flow F₂ towards the intake line 11 and towards the compressor 31.

Release exhaust flow path 51 is intended to release into the atmosphere the assembly exhaust flow F₁ after its cleansing as will be discussed below. A controllable mobile flap 10 may be arranged downstream of the flow divider in order to further control the rate of release exhaust flow F₁. On the other hand, recirculation flow path 52 drives recirculation flow F₂ towards recirculation outlet 54.

An EGR mixer 12 is connected to recirculation outlet 54 and to a fresh air inlet 13. EGR mixer 12 mixes the recirculation flow F₂ with a flow F_{A} of fresh air. The resulting mixture forms the intake gases flow F_{I} that flows in the intake line 11 towards an inlet 311 of compressor 31 through an intake flow path 14. Turbocharger 3 is hence arranged to have its turbine outlet 322 connected to EGR assembly inlet 50 and its compressor inlet 311 connected to the EGR mixer 12.

The flow divider may be a three-way valve 8, preferably a three-way proportional valve, often called recirculation valve or EGR valve. Recirculation valve 8 controls the ratio F₁/F₀ of release exhaust flow F₁ over turbine exhaust flow F₀ and the ratio F₂/F₀ of recirculation flow F₂ over turbine exhaust flow F₀. In other words, recirculation valve 8 controls the portion of exhaust gases flowing into release exhaust flow path 51 and the portion of exhaust gases that flows into recirculation flow path 52. For instance, recirculation valve 8 may allow 50% of exhaust gases into release exhaust flow path 51 and the other 50% into recirculation flow path 52 or 80% and 20% respectively, etc.

A converter unit 6 is fluidically arranged onto release exhaust flow path 51, in the exhaust line 15 and downstream of the turbine 32. Converter unit 6 is adapted to decrease at least the amount of nitrogen oxides (NOₓ) in release exhaust flow F₁. Converter unit 6 may comprise an oxidation catalyst 61 coupled with a reduction catalyst 62. Oxidation catalyst 61 is located in the exhaust line 15, upstream of the first particulate filter component 71. Such an oxidation catalyst 61 may also be located upstream of recirculation valve 8, to help further cleansing of exhaust gases. Like the terms "connect" and "connection", the term "fluidically" refers to a link that enables a fluid to flow between two or more points or parts.

Such an oxidation catalyst, like a Diesel oxidation catalyst (DOC), is able to convert for instance carbon monoxide (CO) into carbon dioxide (CO₂), nitrogen monoxide (NO) into nitrogen dioxide (NO₂) and remaining hydrocarbons (HC) into less hazardous products. Such a reduction catalyst, like a selective catalyst reduction (SCR) system, is able to reduce nitrogen monoxide (NO) into neutral nitrogen (N₂). Converter unit may also consist of a lean Noₓ trap (LNT) catalyst, a three-way catalyst or any other known engine after treatment system (EATS) able to treat nitrogen oxides (NOₓ).

The internal combustion engine system 1 also comprises a particulate filter unit 7, in order to decrease the amount of particulate products, like soot or other organic residues, within the exhaust gases. Particulates filter unit 7 can comprise a Diesel particulate filter unit, which is more specifically adapted to Diesel engine systems.

As shown at figure 2, particulate filter unit 7 comprises a first particulate filter component 71 and a second particulate filter component 72. First and second particulate filter components 71 and 72 are adjacent. In other words, first and second particulate filter components 71 and 72 are arranged next to or near each other, with or without intermediate parts.

A gas-tight partition 73 is arranged between first particulate filter component 71 and second particulate filter component 72. Gas-tight partition 73 is called "gas-tight" because it prevents gases from flowing between first and second particulate filter components 71 and 72. Thus, first particulate filter component 71 and second particulate filter component 72 respectively define a first flow path and a second flow path which are fluidically separate due to the gas-tight partition 73. These first and second flow paths respectively form parts of recirculation flow path 52 and of release exhaust flow path 51. First and second particulate filter components 71 and 72 are adapted to be in fluidic connection respectively with release exhaust flow path 51 and with recirculation flow path 52.

Indeed, first particulate filter component 71 is fluidically arranged in release exhaust flow path 51, whereas second particulate filter component 72 is fluidically arranged in recirculation flow path 52. First particulate filter component 71 is fluidically arranged in the EGR assembly 5 downstream of the EGR assembly inlet 50 and upstream of recirculation outlet 54. Release exhaust flow F₁ flows into first particulate filter component 71, while recirculation flow F₂ flows into second particulate filter component 72. First particulate filter component 71 is fluidically located downstream of converter unit 6. Like converter unit 6, first and/or second particulate filter components 71 and/or 72 may comprise an oxidation catalyst.

An EGR cooler 9 may be arranged onto recirculation flow path 52, downstream of second particulate filter component 72 and upstream of recirculation outlet 54, in order to cool the recirculation portion of exhaust gases.

Gas-tight partition 73 is of a general cylindrical shape along an axial direction. Particulate filter unit 7 comprises an outer cylindrical wall 74 which is arranged in a coaxial manner with gas-tight partition 73. The term cylindrical herein refers to cylinder with a circular basis, but other kinds of cylinders may also be suitable to form the particulate filter unit, for instance an elliptic cylinder. Moreover, the gas-tight partition can have the shape of a prism. First particulate filter component 71 extends between gas-tight partition 73 and outer cylindrical wall 74 of unit 7, whereas second particulate filter component 72 is fully laterally embedded or encased into gas-tight partition 73, hence into first particulate filter component 71.

The main exhaust flow F₁ flows along the axial direction through first particulate filter component 71. On the other hand, the recirculation flow F₂ flows along the axial direction through second particulate filter component 72, without mixing with the main exhaust flow F₁ because of separation by gas-tight partition 73.

In release exhaust flow path 51, both converter unit 6 and first particulate filter component 71 result in pressure drops, whereas in recirculation flow path 52 only second particulate filter component 72 results in a significant pressure drop, because EGR cooler 9 will usually induce a lesser pressure drop.

In other words, recirculation flow path 52 avoids converter unit 6, thus limiting the pressure drop. Inversely, converter unit 6 helps increasing pressure at the upstream point of release exhaust flow path 51, i.e. at recirculation valve 8. This provides the advantage that mobile flap 10 can be more opened, sometimes even fully opened, than the mobile flap of a prior art long-route EGR assembly. The pressure drop due to converter unit 6 indeed compensates for the pressure drop due to the connection of recirculation flow path 52 onto EGR mixer 12, without requiring the exhaust gases flow rate to be lessened by mobile flap 10. Eventually, this results in lower pressure at turbine outlet 322. Such a lower pressure improves the efficiency of turbine 32, hence the fuel consumption of internal combustion engine system 1.

According to another aspect of the present invention, first particulate filter component 71 and second particulate filter component 72 are thermally connected. Indeed, first particulate filter component 71 totally overlaps gas-tight partition 73, while gas-tight partition 73 totally overlaps second particulate filter component 72. "overlap" herein means that one piece covers, at least partly, another piece. Thus, gas-tight partition 73 allows heat transfer between first particulate filter component 71 and second particulate filter component 72.

In the present application, "thermally connected" means that heat is transferred from first particulate filter component 71 to second particulate filter component 72. Such heat transfer occurs by conduction rather than by convection or radiation.

Thermal conductivity of gas-tight partition 73 should preferably be higher than 25 W.m⁻¹.K⁻¹. To this aim, gas-tight partition 73 can be made of metal or metal compounds. For this purpose too, the thickness t₇₃ of gas-tight partition 73 can range between 1 mm and 10 mm. Such features of gas-tight partition 73, combined with the overlapping arrangement with first and second particulate filter components 71 and 72, enable high heat transfers between first and second particulate filter components 71 and 72.

Heat conduction results from indirect contact between first and second particulate filter components 71 and 72, i.e. heat is transferred by conduction through the gas-tight partition 73.

Alternatively, other heat transferring means can be used, either solid or fluid, liquid or gaseous, for achieving heat conduction and/or forced heat convection. Moreover, heat transfer can be achieved by a combination of such heat transferring means.

Besides, heat transfer can result from conduction by direct contact between first and second particulate filter components. Purposely, according to a non shown embodiment, first and second particulate filter components can be arranged not only adjacent but also contiguously, i.e. without any intermediate part like gas-tight partition 73. First and second particulate filter components can overlap partly or totally, for instance side-by-side.

Besides, a heating device may be arranged into release exhaust flow path 51, either near or within first particulate filter component 71, in order to promote the oxidation of the particulate products deposited in first particulate filter component 71. This oxidation process, as known from prior art, results in the so-called "regeneration" of first particulate filter component 71. Since gas-tight partition 73 transfers heat from first particulate filter component 71 to second particulate filter component 72, the regeneration of second particulate filter component 72 also occurs during such a regeneration process, without having to provide a specific heating device for the second particulate filter.

Thus, it only takes one common heating device to operate the regeneration of first and second particulate filter components 71 and 72, i.e. of the full particulate filter unit 7. Such a heating device can comprise a fuel injector 75 located just upstream of first particulate filter component 71 and arranged to inject fuel, downstream of the converter unit 6, in the exhaust line 15 and/or into the first particulate filter component 71. This injected fuel 10 bums into first particulate filter component 71 and heats up second particulate filter component 72. Alternatively, such a heating device may consist of an electric resistor embedded into first particulate filter component or of a burner located just upstream of first particulate filter component 71. The heating device is intended to promote the regeneration of first and second particulate filter components 71 and 72.

The regeneration process of particulate filter unit 7 may be started and controlled in a usual manner. To this aim, the internal combustion engine system 1 may also comprise sensors, e.g. pressure sensors, to start the regeneration process and control its duration and its frequency.

Alternatively, the regeneration of particle filter unit 7 can be passive, i.e. without a need for a burner or a fuel injector.

One or more supply ducts 65 are arranged just upstream of converter unit 6 in order to supply a deoxidizing agent to convert unit 6. The supply duct 65 is connected to the exhaust line 15 upstream of said converter unit 6. For instance, where converter unit 6 consists of a selective catalyst reduction (SCR) system, supply duct 65 may bring urea in a fluidic state. Advantageously, the supply duct may be located downstream of the EGR assembly inlet, so that no deoxydizing agent is conveyed by the recirculation gases.

Other embodiments are also contemplated to be within the scope of the present invention. For instance, the flow divider may consist of a simple three-way tee, instead of a three-way valve like recirculation valve 8 In such a case, EGR flow could be controlled by the flap 10. Alternatively, the EGR flow could be controlled by a proportional valve located in the EGR assembly, for example downstream of the EGR cooler.

According to a non shown embodiment, the heating device may be located either near or within the second particulate filter component in order to heat up the first particulate filter component.

Besides, particulate filter unit, hence first and second particulate filter components can be of other suitable forms. Moreover, particulate filter unit may comprise more than two particulate filter components.

The use of an internal combustion engine system according to the present invention increases the efficiency of the converter unit, since the latter can operate at high temperatures. Furthermore, the use of such an internal combustion engine system decreases the fuel consumption of the engine, because it keeps turbine pressure relatively low.

## Claims

1. An internal combustion engine system (1), comprising a turbocharged internal combustion engine (2), an intake line (11), an exhaust line (15), a turbocharger (3) having a turbine (32) located in said exhaust line (15) and a compressor (31) located in said intake line (11), and an exhaust gas recirculation assembly (5), for recirculating towards said intake line (11) a part (F₂) of the exhaust gases which flow out of said turbine (32), said exhaust gas recirculation assembly (5) comprising:
- an exhaust gas recirculation assembly inlet (50) connected to said exhaust line (15) downstream of said turbine (32), so as to collect said part (F₂) of the exhaust gases ,
- an exhaust gas recirculation assembly outlet (54) connected to said intake line (11) upstream of said compressor (31) so as to allow said part (F₂) of the exhaust gases towards said intake line (11) and said compressor (31),
- a particulate filter unit (7), for decreasing the amount of particulate products within said exhaust gases,
said internal combustion engine system (1) being **characterized**
- **in that** it further comprises a converter unit (6), for decreasing at least the amount of nitrogen oxides (NOx) within said exhaust gases, said converter unit (6) being fluidically arranged in said exhaust line (15) downstream of said turbine (32),
- **in that** said particulate filter unit (7) comprises a first particulate filter component (71) fluidically arranged in said exhaust line (15) downstream of said converter unit (6), said first particulate filter component (71) defining a first flow path;
- **in that** said particulate filter unit (7) comprises a second particulate filter component (72) fluidically arranged in said exhaust gas recirculation assembly (5), downstream of said exhaust gas recirculation assembly inlet (50) and upstream of said exhaust gas recirculation assembly outlet (54), said second particulate filter component (72) defining a second flow path;
said first particulate filter component (71) and said second particulate filter component (72) being thermally connected, and said first flow path and said second flow path being separate.

2. The internal combustion engine system (1) according to claim 1, wherein it further comprises a recirculation valve (8), for controlling the recirculation flow (F₂) flowing into said exhaust gas recirculation assembly (5).

3. The internal combustion engine system (1) according to any preceding claim, wherein said first particulate filter component (71) and said second particulate filter component (72) are adjacent.

4. The internal combustion engine system (1) according to any preceding claim, wherein a gas-tight partition (73) is arranged between said first particulate filter component (71) and said second particulate filter component (72), so as to allow heat transfer between said first particulate filter component (71) and said second particulate filter component (72).

5. The internal combustion engine system (1) according to any preceding claim, wherein one (71) of said first and second particulate filter components (71, 72) encases the other one (72) of said first and second particulate filter components.

6. The internal combustion engine system (1) according to claim 5, wherein said first particulate filter component (71) laterally encases at least part of said second particulate filter component (72).

7. The internal combustion engine system (1) according to claim 6, wherein said first and second particulate filter components (72) are arranged in a coaxial manner.

8. The internal combustion engine system (1) according to claim 7, wherein said gas-tight partition (73) is of a general cylindrical form and wherein said particulate filter unit (7) comprises an outer cylindrical wall (74), said first particulate filter component (71) extending between said gas-tight partition (73) and said outer cylindrical wall (74), and said second particulate filter component (72) extending within said gas-tight partition (73).

9. The internal combustion engine system (1) according to claims 6, 7 or 8, wherein said first particulate filter component (72) fully laterally encases said second particulate filter component (71).

10. The internal combustion engine system (1) according to claim 4 and to any of claim 5 to 9, wherein said gas-tight partition (73) is made of a material having a thermal conductivity higher than 25 W.m⁻¹.K⁻¹.

11. The internal combustion engine system (1) according to any preceding claim, wherein at least one heating device (75) is arranged either near or within said first particulate filter component (71), for promoting the regeneration of said first particulate filter component (71).

12. A particulate filter unit (7) for an internal combustion engine system (1), **characterized in that** it comprises at least a first particulate filter component (71) defining a first flow path , a second particulate filter component (72) defining a second flow path, said first particulate filter component (71) and said second particulate filter component (72) being thermally connected, and said first flow path and said second flow path being separate, wherein a gas-tight partition (73) is arranged between said first particulate filter component (71) and said second particulate filter component (72), so as to allow heat transfer between said first particulate filter component (71) and said second particulate filter component (72), and wherein said gas-tight partition (73) is made of a material having a thermal conductivity higher than 25 W.m⁻¹.K⁻¹.

13. The particulate filter unit according to claim 16, wherein one (71) of said first and second particulate filter components (71, 72) encases the other one (72) of said first and second particulate filter components.

14. The particulate filter unit according to claim 17, wherein said first particulate filter component (71) laterally encases at least part of said second particulate filter component (72).

15. The particulate filter unit according to claim 17, wherein said first and second particulate filter components (72) are arranged in a coaxial manner.

## Patentansprüche

1. Verbrennungsmotorsystem (1) mit einem turbogeladenen Verbrennungsmotor (2), einer Ansaugleitung (11), einer Abgasleitung (15), einem Turbolader (3) mit einer in der Abgasleitung (15) angeordneten Turbine (32) und einem in der Ansaugleitung (11) angeordneten Kompressor (31), und einer Abgasrückführanordnung (5) für eine Rückführung eines Teils (F₂) der Abgase, die aus der Turbine (32) strömen in Richtung der Ansaugleitung (11), wobei die Abgasrückführanordnung (5) umfasst:
- einen Abgasrückführanordnungseinlass (50), der mit der Abgasleitung (15) stromabwärts der Turbine (32) verbunden ist, um den Teil (F₂) der Abgase zu sammeln,
- einen Abgasrückführanordnungsauslass (54), der mit der Ansaugleitung (11) stromaufwärts des Kompressors (31) verbunden ist, damit der Teil (F₂) der Abgase in Richtung der Ansaugleitung (11) des Kompressors (31) strömen kann,
- eine Partikelfiltereinheit (7) zur Verringerung der Menge an Partikelerzeugnissen innerhalb der Abgase,
wobei das Verbrennungsmotorsystem (1) **dadurch gekennzeichnet ist,**
- **dass** es außerdem eine Konvertereinheit (6) zur Verringerung wenigstens der Menge an Stickstoffoxiden (NOx) innerhalb der Abgase umfasst, wobei die Konvertereinheit (6) fluidisch in der Abgasleitung (15) stromabwärts der Turbine (32) vorgesehen ist,
- **dass** die Partikelfiltereinheit (7) eine erste Partikelfilterkomponente (71) umfasst, die fluidisch in der Abgasleitung (15) stromabwärts der Konvertereinheit (6) vorgesehen ist, wobei die erste Partikelfilterkomponente (71) einen ersten Strömungsweg bildet,
- **dass** die Partikelfiltereinheit (7) eine zweite Partikelfilterkomponente (72) umfasst, die fluidisch in der Abgasrückführanordnung (5) stromabwärts des Abgasrückführanordnungseinlasses (50) und stromaufwärts des Abgasrückführanordnungsauslasses (54) angeordnet ist, wobei die zweite Partikelfilterkomponente (72) einen zweiten Strömungsweg bildet,
wobei die erste Partikelfilterkomponente (71) und die zweite Partikelfilterkomponente (72) thermisch gekoppelt sind und der erste Strömungsweg und der zweite Strömungsweg getrennt sind.

2. Verbrennungsmotorsystem (1) nach Anspruch 1, wobei es außerdem ein Rückführventil (8) zur Steuerung der Rückführströmung (F₂) umfasst, die in die Abgasrückführanordnung (5) strömt.

3. Verbrennungsmotorsystem (1) nach irgendeinem vorhergehenden Anspruch, wobei die erste Partikelfilterkomponente (71) und die zweite Partikelfilterkomponente (72) aneinander angrenzen.

4. Verbrennungsmotorsystem (1) nach irgendeinem vorhergehenden Anspruch, wobei eine gasdichte Trennwand (73) zwischen der ersten Partikelfilterkomponente (71) und der zweiten Partikelfilterkomponente (72) angeordnet ist, um eine Wärmeübertragung zwischen der ersten Partikelfilterkomponente (71) und der zweiten Partikelfilterkomponente (72) zu ermöglichen.

5. Verbrennungsmotorsystem (1) nach irgendeinem vorhergehenden Anspruch, wobei eine (71) der ersten und zweiten Partikelfilterkomponenten (71, 72) die andere (72) der ersten und zweiten Partikelfilterkomponenten umschließt.

6. Verbrennungsmotorsystem (1) nach Anspruch 5, wobei die erste Partikelfilterkomponente (71) wenigstens einen Teil der zweiten Partikelfilterkomponente (72) seitlich umschließt.

7. Verbrennungsmotorsystem (1) nach Anspruch 6, wobei die erste und zweite Partikelfilterkomponente (71, 72) koaxial angeordnet sind.

8. Verbrennungsmotorsystem (1) nach Anspruch 7, wobei die gasdichte Trennwand (73) eine insgesamt zylindrische Form aufweist und wobei die Partikelfiltereinheit (7) eine äußere Zylinderwand (74) umfasst, wobei sich die erste Partikelfilterkomponente (71) zwischen der gasdichten Trennwand (73) und der äußeren Zylinderwand (74) erstreckt, und sich die zweite Partikelfilterkomponente (72) innerhalb der gasdichten Trennwand (73) erstreckt.

9. Verbrennungsmotorsystem (1) nach den Ansprüchen 6, 7 oder 8, wobei die erste Partikelfilterkomponente (71) die zweite Partikelfilterkomponente (72) seitlich voll umschließt.

10. Verbrennungsmotorsystem (1) nach Anspruch 4 und irgendeinem der Ansprüche 5 bis 9, wobei die gasdichte Trennwand (73) aus einem Material hergestellt ist, das eine Wärmeleitfähigkeit von höher als 25 W.m⁻¹.K⁻¹ aufweist.

11. Verbrennungsmotorsystem (1) nach irgendeinem vorhergehenden Anspruch, wobei wenigstens eine Heizvorrichtung (75) entweder in der Nähe oder innerhalb der ersten Partikelfilterkomponente (71) angeordnet ist, um die Regeneration der ersten Partikelfilterkomponente (71) zu unterstützen.

12. Partikelfiltereinheit (7) für ein Verbrennungsmotorsystem (1), **dadurch gekennzeichnet, dass** sie wenigstens eine erste Partikelfilterkomponente (71), die einen ersten Strömungsweg bildet, und eine zweite Partikelfilterkomponente (72) umfasst, die einen zweiten Strömungsweg bildet, wobei die erste Partikelfilterkomponente (71) und die zweite Partikelfilterkomponente (72) thermisch gekoppelt sind und der erste Strömungsweg und der zweite Strömungsweg getrennt sind, wobei eine gasdichte Trennwand (73) zwischen der ersten Partikelfilterkomponente (71) und der zweiten Partikelfilterkomponente (72) angeordnet ist, um eine Wärmeübertragung zwischen der ersten Partikelfilterkomponente (71) und der zweiten Partikelfilterkomponente (72) zu ermöglichen, und wobei die gasdichte Trennwand aus einem Material hergestellt ist, das eine Wärmeleitfähigkeit von höher als 25 W.m⁻¹.K⁻¹ aufweist.

13. Partikelfiltereinheit nach Anspruch 12, wobei eine (71) der ersten und zweiten Partikelfilterkomponenten (71, 72) die andere (72) der ersten und zweiten Partikelfilterkomponenten umschließt.

14. Partikelfiltereinheit nach Anspruch 13, wobei die erste Partikelfilterkomponente (71) wenigstens einen Teil der zweiten Partikelfilterkomponente (72) seitlich umschließt.

15. Partikelfiltereinheit nach Anspruch 13, wobei die erste und zweite Partikelfilterkomponente (71, 72) koaxial angeordnet sind.

## Revendications

1. Système de moteur à combustion interne (1), comprenant un moteur à combustion interne (2) suralimenté, une conduite d'admission (11), une conduite d'échappement (15), un turbocompresseur (3) ayant une turbine (32) située dans ladite conduite d'échappement (15) et un compresseur (31) situé dans ladite conduite d'admission (11), et un ensemble de recirculation de gaz d'échappement (5) pour recirculer vers ladite conduite d'admission (11) une partie (F₂) des gaz d'échappement qui s'écoulent hors de ladite turbine (32), ledit ensemble de recirculation de gaz d'échappement (5) comprenant :
- une entrée (50) de l'ensemble de recirculation de gaz d'échappement raccordée à ladite conduite d'échappement (15) en aval de ladite turbine (32), de manière à recueillir ladite partie (F₂) des gaz d'échappement,
- une sortie (54) de l'ensemble de recirculation de gaz d'échappement raccordée à ladite conduite d'admission (11) en amont dudit compresseur (31) de manière à permettre à ladite partie (F₂) des gaz d'échappement à se diriger vers ladite conduite d'admission (11) et ledit compresseur (31),
- une unité de filtre à particules (7) pour diminuer la quantité de produits particulaires dans lesdits gaz d'échappement,
ledit système de moteur à combustion interne (1) étant **caractérisé**
- **en ce qu'**il comprend en outre une unité de convertisseur (6) pour diminuer au moins la quantité d'oxydes d'azote (NOx) dans lesdits gaz d'échappement, ladite unité de convertisseur (6) étant agencée fluidiquement dans ladite conduite d'échappement (15) en aval de ladite turbine (32),
- **en ce que** ladite unité de filtre à particules (7) comprend un premier composant de filtre à particules (71) agencé fluidiquement dans ladite conduite d'échappement (15) en aval de ladite unité de convertisseur (6), ledit premier composant de filtre à particules (71) définissant un premier trajet d'écoulement ;
- **en ce que** ladite unité de filtre à particules (7) comprend un deuxième composant de filtre à particules (72) agencé fluidiquement dans ledit ensemble de recirculation de gaz d'échappement (5), en aval de ladite entrée (50) de l'ensemble de recirculation de gaz d'échappement et en amont de ladite sortie (54) de l'ensemble de recirculation de gaz d'échappement, ledit deuxième composant de filtre à particules (72) définissant un deuxième trajet d'écoulement ;
ledit premier composant de filtre à particules (71) et ledit deuxième composant de filtre à particules (72) étant raccordés thermiquement, et ledit premier trajet d'écoulement et ledit deuxième trajet d'écoulement étant séparés.

2. Système de moteur à combustion interne (1) selon la revendication 1, comprenant en outre une soupape de recirculation (8), pour réguler l'écoulement de recirculation (F₂) s'écoulant dans ledit ensemble de recirculation de gaz d'échappement (5).

3. Système de moteur à combustion interne (1) selon l'une quelconque des revendications précédentes, dans lequel ledit premier composant de filtre à particules (71) et ledit deuxième composant de filtre à particules (72) sont adjacents.

4. Système de moteur à combustion interne (1) selon l'une quelconque des revendications précédentes, dans lequel une cloison étanche aux gaz (73) est agencées entre ledit premier composant de filtre à particules (71) et ledit deuxième composant de filtre à particules (72), de manière à permettre un transfert thermique entre ledit premier composant de filtre à particules (71) et ledit deuxième composant de filtre à particules (72).

5. Système de moteur à combustion interne (1) selon l'une quelconque des revendications précédentes, dans lequel l'un (71) desdits premier et deuxième composants de filtre à particules (71, 72) enveloppe l'autre (72) desdits premier et deuxième composants de filtre à particules.

6. Système de moteur à combustion interne (1) selon la revendication 5, dans lequel ledit premier composant de filtre à particules (71) enveloppe latéralement au moins une partie dudit deuxième composant de filtre à particules (72).

7. Système de moteur à combustion interne (1) selon la revendication 6, dans lequel lesdits premier et deuxième composants de filtre à particules (71, 72) sont agencés de manière coaxiale.

8. Système de moteur à combustion interne (1) selon la revendication 7, dans lequel ladite cloison étanche aux gaz (73) a une forme généralement cylindrique et dans lequel ladite unité de filtre à particules (7) comprend une paroi cylindrique externe (74), ledit premier composant de filtre à particules (71) s'étendant entre ladite cloison étanche aux gaz (73) et ladite paroi cylindrique externe (74), et ledit deuxième composant de filtre à particules (72) s'étendant à l'intérieur de ladite cloison étanche aux gaz (73).

9. Système de moteur à combustion interne (1) selon les revendications 6, 7 ou 8, dans lequel ledit premier composant de filtre à particules (72) enveloppe complètement latéralement ledit deuxième composant de filtre à particules (71).

10. Système de moteur à combustion interne (1) selon la revendication 4 et selon l'une quelconque des revendications 5 à 9, dans lequel ladite cloison étanche aux gaz (73) est fabriquée en un matériau ayant une conductivité thermique supérieure à 25 W.m⁻¹.K⁻¹.

11. Système de moteur à combustion interne (1) selon l'une quelconque des revendications précédentes, dans lequel au moins un dispositif de chauffage (75) est agencé soit à proximité soit à l'intérieur dudit premier composant de filtre à particules (71), afin de favoriser la régénération dudit premier composant de filtre à particules (71).

12. Unité de filtre à particules (7) pour un système de moteur à combustion interne (1), **caractérisée en ce qu'**elle comprend au moins un premier composant de filtre à particules (71) définissant un premier trajet d'écoulement, un deuxième composant de filtre à particules (72) définissant un deuxième trajet d'écoulement, ledit premier composant de filtre à particules (71) et ledit deuxième composant de filtre à particules (72) étant raccordés thermiquement, et ledit premier trajet d'écoulement et ledit deuxième trajet d'écoulement étant séparés, dans laquelle une cloison étanche aux gaz (73) est agencée entre ledit premier composant de filtre à particules (71) et ledit deuxième composant de filtre à particules (72), de manière à permettre un transfert thermique entre ledit premier composant de filtre à particules (71) et ledit deuxième composant de filtre à particules (72), et dans laquelle ladite cloison étanche aux gaz (73) est fabriquée en un matériau ayant une conductivité thermique supérieure à 25 W.m⁻¹.K⁻¹.

13. Unité de filtre à particules selon la revendication 16, dans laquelle l'un (71) desdits premier et deuxième composants de filtre à particules (71, 72) enveloppe l'autre (72) desdits premier et deuxième composants de filtre à particules.

14. Unité de filtre à particules selon la revendication 17, dans laquelle ledit premier composant de filtre à particules (71) enveloppe latéralement au moins une partie dudit deuxième composant de filtre à particules (72).

15. Unité de filtre à particules selon la revendication 17, dans laquelle lesdits premier et deuxième composants de filtre à particules (71, 72) sont agencés de manière coaxiale.
